# FASCICULE DE BREVET EUROPEEN

(11) **EP 0 519 294 B1**
(45) Date de publication et mention de la délivrance du brevet: **10.04.1996**
(21) Numéro de dépôt: 92109642.6
(22) Date de dépôt: 09.06.1992
(51) Int. Cl.: B29D 30/10, B29D 30/30, B29D 30/38

(54) **Procédé de fabrication d'un pneumatique et machines pour la mise en oeuvre de ce procédé**
Verfahren zur Herstellung eines Reifens und Maschine zur Durchführung des Verfahrens
Method for the production of a tyre and machine for implementing the method

(30) Priorité: 17.06.1991 FR 9107505
(43) Date de publication de la demande: 23.12.1992
(73) Titulaire: SEDEPRO, F-75015 Paris (FR)
(72) Inventeur: Debroche, Claude, F-63118 Cebazat (FR); Laurent, Daniel, F-38240 Meylan (FR)
(74) Mandataire: Bauvir, Jacques

(56) Documents cités:
- EP-A- 0 248 301
- DE-C- 1 081 332

## Description

La présente invention concerne la fabrication des pneumatiques. Plus précisément, elle se rapporte à la fabrication des armatures de renforcement que l'on trouve dans les pneumatiques à ceinture et, en général, à carcasse dite radiale.

On entend par "fabrication d'un pneumatique" une fabrication complète ou encore une fabrication partielle comportant au moins les renforcements fabriqués selon le procédé qui va être exposé, le pneumatique fabriqué ne comportant pas par exemple de bande de roulement.

Par le brevet US 4 952 259, l'état de la technique connaît une tentative récente de fabriquer de tels renforcements non plus sous forme de produits semi-finis que l'on incorpore par la suite lors de l'assemblage du pneumatique, mais directement sur le pneumatique en cours de fabrication, et à partir d'un seul fil. Cette proposition, qui est basée sur la projection de troncons successifs dudit fil à la manière de la lanière d'un fouet, permet de balayer les angles courants des nappes dites de sommet. Cependant, elle permet difficilement d'atteindre des angles faibles.

L'enseignement de ce brevet ne permet pas non plus de réaliser une nappe de carcasse dans laquelle le fil va, sans être interrompu, d'un talon à l'autre du pneumatique.

L'objectif de la présente invention est de proposer un procédé de fabrication qui permette de réaliser, à partir d'un seul fil, tous les renforts de sommet, c'est-à-dire les renforts que l'on trouve sous la bande de roulement, quel que soit l'angle que forment les fils de ces renforts par rapport au plan médian perpendiculaire à l'axe de rotation du pneumatique. Le terme "fil" doit bien entendu être compris dans un sens tout à fait général, englobant un fil unitaire proprement dit, ou un câble ou un assemblage équivalent, et ceci, quelle que soit la matière constituant le fil.

Selon l'invention, le procédé de fabrication d'un pneumatique, dont un renfort au moins est constitué à partir d'un seul fil dont des tronçons successifs, prélevés hors dudit fil par des moyens de coupe, sont déposés sur un support rigide définissant la forme de la surface intérieure du pneumatique, et sur lequel on construit progressivement tout ou partie du pneumatique, est caractérisé en ce que
- le fil nécessaire pour constituer un tronçon est prélevé par des moyens d'alimentation en fil, permettant l'appel d'une quantité déterminée de fil, destinée à constituer un tronçon,
- chaque tronçon successif est posé par au moins une tête de pose décrivant une trajectoire orbitale entourant le support, ladite trajectoire comportant une zone de pose du tronçon de fil, ladite trajectoire orbitale se développant dans un plan qui coupe l'axe de rotation du support selon un angle de pose réglable,
- ledit support est animé d'un mouvement de rotation dont la vitesse angulaire dépend de la vitesse angulaire de la tête de pose, de l'angle de pose, du nombre de têtes de pose et du pas de pose des tronçons de fil.

Deux principes de réalisation vont être exposés avec des machines qui comportent une tête de pose décrivant une trajectoire orbitale circulaire. La tête de pose peut, outre sa fonction de base, provoquer par son mouvement l'appel du fil nécessaire, ou bien encore l'appel du fil et la présentation d'un tronçon devant la tête de pose sont assurés par des organes indépendants de celle-ci.

L'invention s'étend aussi aux machines de fabrication d'un renfort pour pneumatique, permettant de mettre en oeuvre ce procédé, machines ayant une tête de pose capable de décrire autour d'un noyau rigide n'importe quelle trajectoire d'encerclement du noyau convenable. Ce noyau rigide constitue le support rigide qui définit la surface intérieure du pneumatique.

On connait du document DE-B-1 081 332 une machine de fabrication d'un renfort pour pneumatiques, déposé sur un support rigide rotatif au moyen d'une tête de pose. Cette machine n'est cependant pas utilisable pour la pose de tronçons successifs de fil.

Partant d'un machine connue du document US-A-4 952 259, la machine selon l'invention est caractériseé en ce qu'elle comporte:
- un bâti,
- un noyau rotatif, rigide, démontable, constituant ledit support,
- des moyens de dévidage pour prélever la quantité déterminée de fil nécessaire pour constituer un tronçon,
- au moins une tête de pose décrivant une trajectoire orbitale autour du noyau, ladite trajectoire comportant une zone de pose, ladite trajectoire se développant dans un plan qui coupe l'axe de rotation du noyau selon un angle de pose réglable,
- des moyens d'entraînement de la ou des têtes de pose, et des moyens d'entraînement en rotation du noyau, la vitesse de ces derniers dépendant de la vitesse d'entraînement de la ou des têtes de pose, de leur nombre et dudit angle de pose, et du pas de pose des tronçons de fil.

La suite de la description, à consulter en parallèle avec les figures jointes, permet de bien comprendre l'invention et d'en saisir tous les avantages.

La figure 1 est une vue en élévation, avec coupe partielle, d'une première variante de machine réalisée selon le principe de l'invention.

La figure 2 est une coupe selon II-II à la figure 1.

La figure 3 est une vue de côté de la même machine.
La figure 4 montre un détail de la machine selon la première variante.

La figure 5 est une vue en élévation, avec coupe partielle, d'une deuxième variante.

La figure 6 montre un organe utilisé avec cette deuxième variante.

La figure 7 est une vue de côté de la deuxième machine.

La figure 8 illustre un détail de cette deuxième machine.

La figure 9 montre une troisième variante de machine réalisée selon les principes de l'invention.

La figure 10 est une coupe selon X X à la figure 9.

Sur les figures, on aperçoit le bâti 1 de la machine, un noyau rigide 2 démontable servant de support sur lequel on construit progressivement le pneumatique en y déposant des produits caoutchouteux et des renforts comme requis par son architecture. Le noyau 2 est monté rotatif sur le bâti 1. Avant application de fils de renforcements, le noyau 2 est revêtu au moins par une couche de caoutchouc cru. On voit encore une tête de pose 3A ou 3B ou 3C montée en extrémité du bras cintré 30.

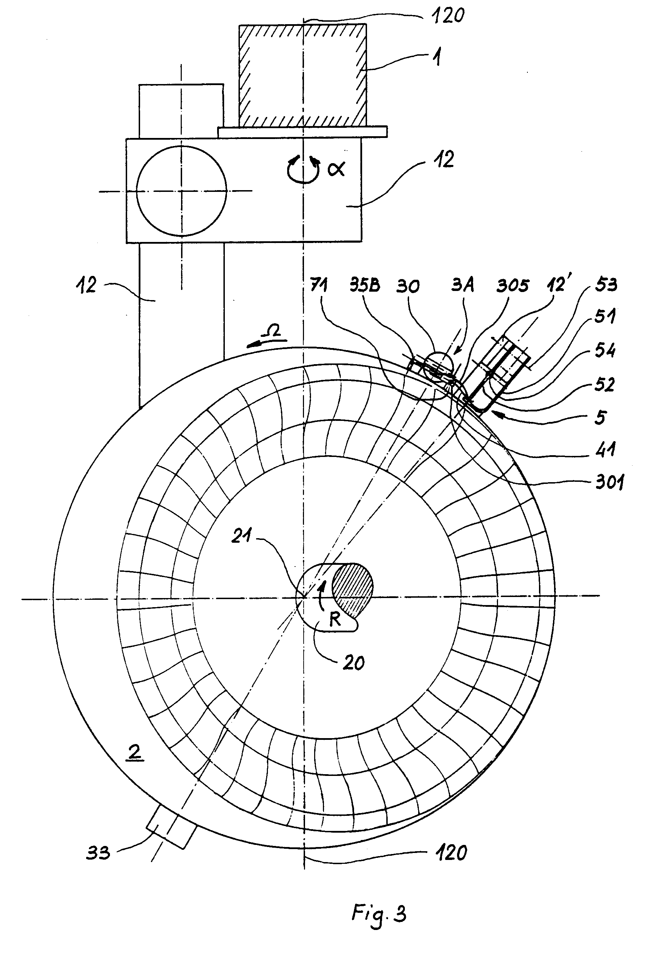

Dans toutes les variantes, la tête de pose 3A ou 3B ou 3C décrit une trajectoire circulaire qui s'inscrit dans un plan dont l'orientation α par rapport au bâti 1, et donc par rapport au noyau 2, peut être réglée. A cette fin, la tête de pose 3A ou 3B ou 3C est supportée par un berceau 12 articulé selon l'axe 120 par rapport au bâti 1. Le plan de cette trajectoire correspond au plan des figures 3, 7 et 9.

Dans toutes les variantes illustrant cette description les tronçons de fil sont des morceaux individuels libérés au fur et à mesure par les moyens de coupe du fil.

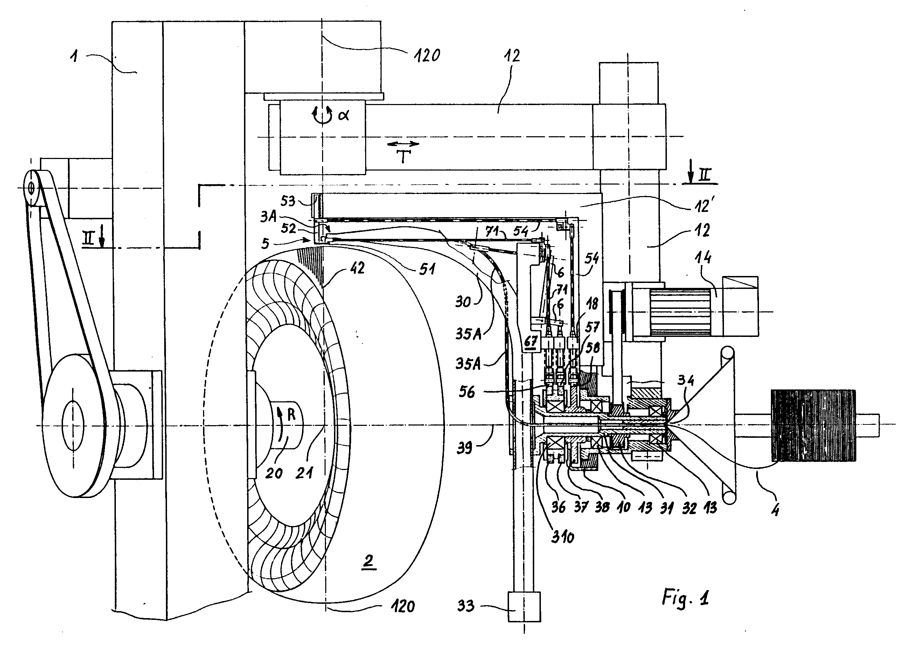

La première variante de l'invention, illustrée par les figures 1 à 4, se caractérise en ce que l'appel d'une quantité déterminée de fil est assuré par la tête de pose 3A, elle-même, alors que dans les deux autres variantes, l'appel est assuré de façon indépendante de la tête de pose 3B ou 3C.

Le bras cintré 30 est monté à l'extrémité d'un arbre 31, nécessairement creux dans la première variante, fixé sur le berceau 12 via les roulements 13. Ce bras 30 est entraîné en rotation par un moteur 14 actionnant la poulie dentée 32. Le contre poids 33 permet d'en assurer le bon équilibrage. La tête de pose 3A décrit une trajectoire circulaire autour de l'axe 39 lorsqu'elle est entraînée par ledit moteur.

La machine est alimentée de façon continue en fil 4 par tout moyen approprié. Le fil 4 pénètre dans la machine en un point fixe dans l'espace, situé donc sur l'axe de rotation du bras cintré 30, à savoir dans l'orifice 34. Le fil est ensuite guidé en coulissant dans un tube réalisé en deux parties 35A et 35B dont la première pénètre légèrement dans la seconde, pour remplir une fonction qui sera expliquée ultérieurement. Le tube 35A+35B est accroché sur un côté du bras cintré 30, de préférence du côté aval par rapport au sens de rotation du bras 30. On appelle "côté aval" le côté vers lequel se dirige le bras cintré 30 au cours de sa rotation. Le fil 4 doit sortir du côté amont de la tête de pose 3A, c'est-à-dire en arrière par rapport au sens de rotation du bras 30, et être immobilisé chaque fois que la tête de pose 3A entre dans la zone de pose.

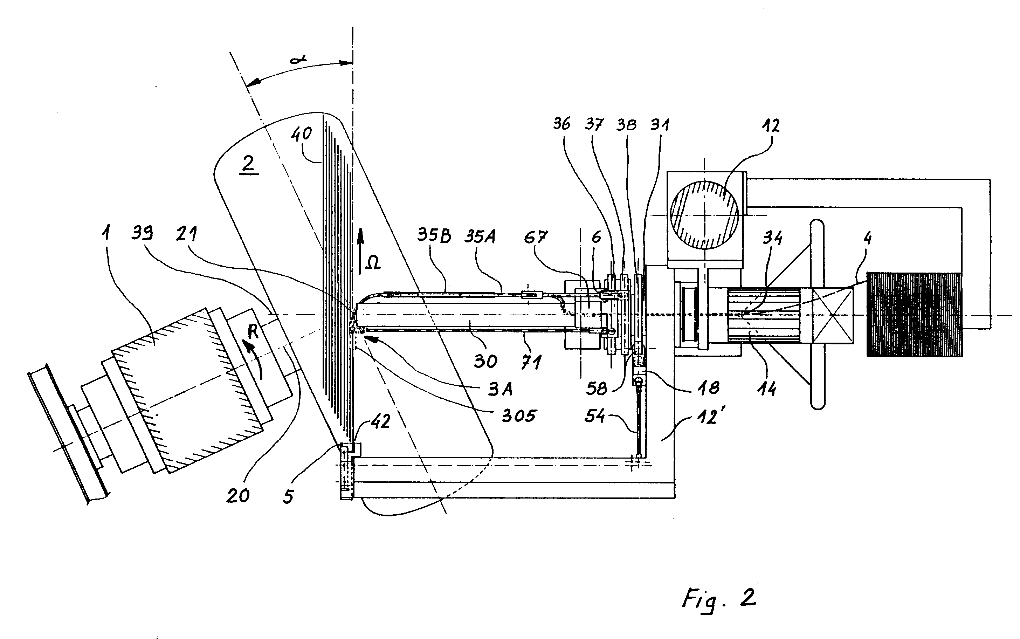

On remarque le sens du mouvement de la tête de pose 3A symbolisé par une flèche Ω, et la position du tube 35B par rapport à ce sens de rotation (voir notamment figures 2 et 3). Au cours de son mouvement, la tête de pose 3A passe radialement juste au dessus d'une pince 5 accrochée à la partie 12' du berceau 12, donc fixe dans l'espace, pour assurer l'immobilisation du fil. Notons qu'il ne s'agit là que d'un détail d'exécution ; l'immobilisation pourrait aussi être obtenue par exemple par une lame fixe, c'est-à-dire solidaire du bâti, et non pas de la tête de pose, pressant le fil sur le noyau pour le coller sur celui-ci et donc le retenir.

Afin de clarifier la figure 1, la partie 12' du berceau 12 supportant la pince 5 a été rabattue dans le plan vertical, pour dégager le noyau. La position réelle de cette partie 12' du berceau 12 est celle représentée aux figures 2 et 3. En outre, la position de la tête de pose 3A est identique pour les figures 1 et 2, alors qu'à la figure 3, la tête de pose 3A est représentée dans une position antérieure.

Un premier mors 51 de cette pince est directement solidaire du bâti, tandis qu'un second mors 52 est articulé sur ce bâti en 53, et commandé par une tige 54. Juste en arrière de l'orifice de sortie 301 du fil 4, est disposée une petite lame de rabattement 305 plaquant suffisamment le fil 4 radialement vers le bas pour que, lorsque la tête de pose 3A a dépassé le niveau de la pince 5, le fil 4 se présente toujours entre les mors 51 et 52 de ladite pince.

Le rapprochement des mors 51 et 52, commandé comme on le verra dans la suite, permet alors d'immobiliser le fil 4. La tête de pose 3A est alors dans la position de la figure 3. La poursuite du mouvement de la tête de pose 3A provoque l'appel de la quantité du fil 4 nécessaire pour poser un tronçon de fil constituant le renforcement. La coupe du fil 4 est assurée par une guillotine 7 commandé par une tige 71. En outre, lorsque le fil 4 a été coupé en fin de zone de pose, l'intervention de cette lame de rabattement 305 garantit que l'extrémité du tronçon de fil est bien collée sur le noyau.

Aux figures 1 et 2, on voit encore que sont montées concentriquement autour de l'arbre 31 trois cames 36, 37, 38 qui coopèrent respectivement avec les galets 56, 57, 58. Les cames 36 et 37 sont immobiles : elles sont donc désolidarisées du mouvement de rotation de l'arbre 31 par le palier 310, et sont reliées au bâti 1 par la patte 10. Les galets 56 et 57 associés à ces cames sont montés sur un support 67 solidaire du bras cintré 30 et sont donc entraînés en rotation par celui-ci. La came 38 est quant à elle solidaire de l'arbre 31 et tourne avec celui-ci, alors que le galet 58 associé est monté sur un support 18 solidaire du bâti 1 : il n'est donc pas mobile en rotation.

Le noyau rigide 2 est monté rotatif autour de son axe 20, lequel est monté sur le bâti 1. Le berceau 12 peut tourner par rapport audit bâti 1 autour de l'axe 120. L'axe 20 et l'axe 120 sont sécants au point 21 médian du noyau 2. Le mouvement de rotation autour de l'axe 20 est symbolisé par la flèche R. Le degré de liberté de rotation autour de l'axe 120, symbolisé par α, permet le réglage du noyau 2 par rapport à la trajectoire circulaire décrite par la tête de pose 3A : c'est le réglage de l'angle α sous lequel on souhaite poser les fils de renforcement de sommet. Il est possible de prendre les mesures nécessaires pour que cet angle a soit continûment variable, ce qui permet de poser des fils de renforcement selon des trajectoires non rectilignes. Le bras cintré 30 est dimensionné et conformé de façon à ce que la tête de pose 3A, plus précisément l'orifice de sortie 301 du fil 4, décrive une trajectoire circulaire autour du noyau 2, à un niveau juste supérieur au rayon maximal du noyau 2. La position théorique relative de cette trajectoire circulaire est telle que l'axe 39 coupe l'axe 20 au point 21. En pratique, de préférence, on décale légèrement l'axe 39 vers le bas (vu sur les figures 1 et 2) par rapport à l'axe 20 pour éloigner la tête de pose 3A du noyau 2 du côté où l'on ne pose pas de fil.

De préférence, le berceau 12 peut encore subir une translation par rapport au bâti, parallèlement à l'axe 39, comme symbolisé par la flèche T. Cette translation T et la rotation α permettent tous les réglages voulus du noyau 2 par rapport à la trajectoire de la tête de pose 3A pour pouvoir réaliser tous les renforcements de sommet souhaitables. Le noyau 2, apparaissant en traits pleins à la figure 2, et en perspective à la figure 1, est réglé selon l'angle choisi. Par exemple, un angle α typique pour un renforcement de sommet vaut environ 25°. Le bras cintré 30 est conformé pour qu'il reste toujours en dehors de la sphère enveloppe de toutes les positions possibles pour le noyau 2, tout en permettant à la tête de pose 3A d'atteindre le zénith du noyau au cours de sa trajectoire. La zone de pose de cette trajectoire correspond au moment où la tête de pose 3A surplombe le noyau 2 du côté où le fil 4 est appliqué sur le noyau. Le procédé ne comporte pas de réelle limite, ni inférieure, ni supérieure, pour l'angle α. Bien entendu, il vient un moment où l'angle α est si faible que l'on est obligé de combiner le mouvement de rotation à une translation relative entre le plan de rotation de la tête de pose et le noyau. Il s'agit là de considérations relatives à la conception du pneumatique plutôt qu'au procédé.

Il est même possible de réaliser un renfort à zéro degré comme on en trouve de plus en plus dans les pneumatiques portant un indice de vitesse HR, ou plus, sans devoir recourir à une autre machine de pose, ce qui est encore un avantage supplémentaire de cette invention, permettant donc de balayer les angles de 0° à 90°.

Si l'on réalise un renforcement de sommet à zéro degré (plus exactement à un angle très faible, correspondant au pas de pose d'un renforcement dit "à zéro degré"), ou plus généralement à un angle faible au sens du paragraphe précédent, alors la pose peut se faire par trancannage, en utilisant la translation T. Une telle pose peut se faire par exemple en immobilisant la tête de pose 3A et en faisant tourner le noyau 2 dans le sens adéquat. On règle donc l'angle de la trajectoire orbitale à zéro degré, et on obtient le petit angle correspondant au pas de pose du tronçon du fil en réglant la vitesse de translation T en fonction de la vitesse de rotation du noyau 2.

Le fonctionnement détaillé de la machine est le suivant. Le noyau 2 est animé d'un mouvement de rotation R autour de son axe 20, dont la vitesse dépend de la vitesse de rotation de la tête de pose 3A autour de son axe 39, et aussi de l'angle α, en fonction du pas de pose du fil. Dans les conditions initiales, un morceau 41 de fil 4 dépasse hors de l'orifice de sortie 301 situé en arrière de la tête de pose 3A. Dès que l'extrémité 42 du fil 4 est arrivée à hauteur de la limite latérale souhaitée pour le renforcement de sommet, il est immobilisé par la pince 5, actionnée par la came 38, via les tiges 54. C'est le début de la zone de pose.

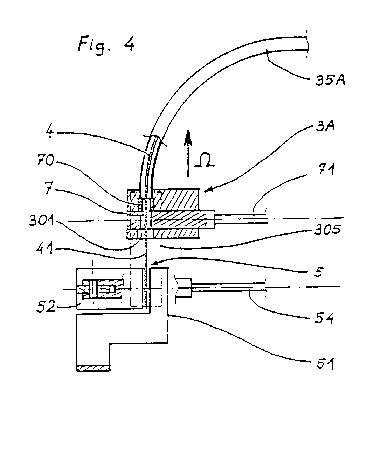

La poursuite de la rotation de la tête de pose 3A provoque l'appel de fil qui chemine donc dans le tube 35A+35B. La came 37 actionne le basculeur 6 dont l'extrémité est attachée à la partie 35A du tube, pour augmenter la longueur de chemin du fil enfilé dans les tubes 35A+35B qui restent emmanchés l'un dans l'autre. Lorsque la tête de pose 3A arrive à hauteur de l'autre bord latéral souhaité pour le renforcement de sommet, la guillotine 7 actionnée par la came 36 via les tiges 71 sectionne le fil 4. A la figure 4, on aperçoit la lame de la guillotine 7, solidaire du mouvement de la tige 71, et le manchon 70 retenant le fil 4 pour qu'il puisse être sectionné par la lame.

Pendant la phase de retour, la came 37 provoque une diminution de la longueur du chemin du fil 4 dans les tubes 35A+35B, pour faire sortir hors de l'orifice 301 de la tête de pose 3A un nouveau morceau 41 de fil 4 ayant une longueur déterminée, afin de ramener la machine dans les conditions initiales.

Pour une parfaite maîtrise des conditions initiales, il convient d'installer sur le chemin du fil 4, un dispositif anti-retour du fil 4 (non représenté), ou de prendre n'importe quelle mesure d'effet équivalent.

Les variantes suivantes utilisent des éléments de la première variante : ceux-ci sont désignés par les mêmes références aux figures et ne font pas l'objet d'une description détaillée supplémentaire. Les organes spécifiques de chacune des deuxième et troisième variantes portent une référence spécifique, et les organes similaires sont désignés par des références portant l'identifiant B ou C respectivement. Ces deuxième et troisième variantes ont en commun les moyens de dévidage et de coupe.

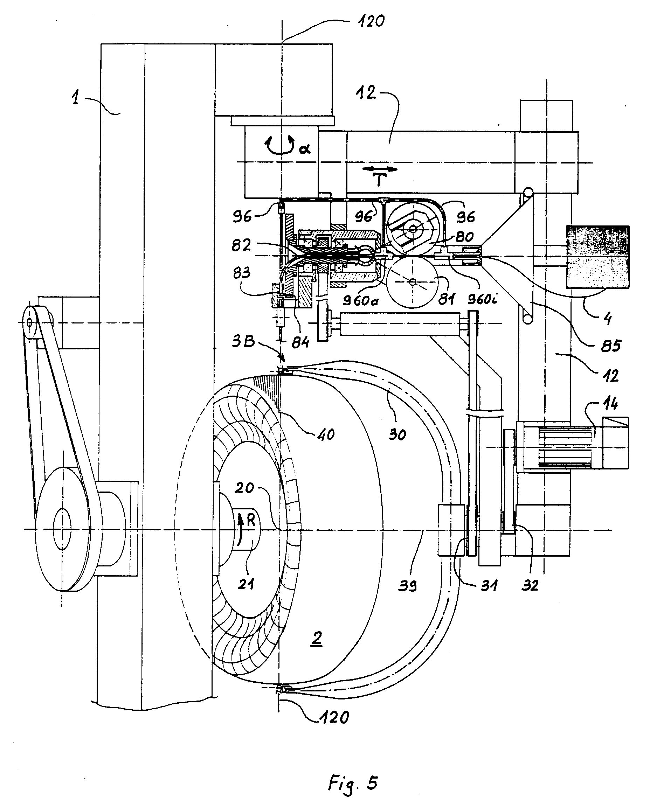

Pour en assurer le dévidage, le fil 4 est pincé entre deux galets 80, 81 couverts d'un revêtement anti-dérapant (voir fig. 5). Les galets 80, 81 sont motorisés d'une façon qui permet l'appel de fil 4 et la mesure précise de la quantité appelée. N'importe quel type de fil peut être motorisé et mesuré de cette manière. Tous les mouvements de la machine peuvent être reliés par une synchronisation mécanique et dans ce cas, la connaissance de la quantité appelée est déduite du nombre de tours de la commande et de la démultiplication installée.

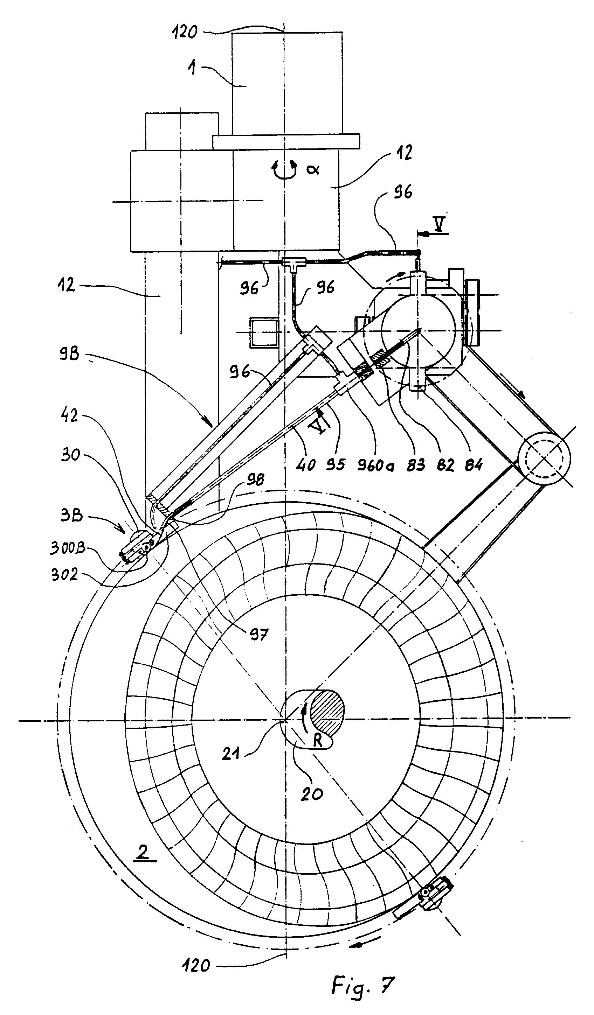

Le fil 4 est ensuite introduit dans une tubulure 82, dont l'extrémité renforcée constitue un canon 83 supportant le fil 4 lorsqu'il est tranché par le couteau rotatif 84. La position réelle du canon dans l'espace est celle apparaissant à la figure 7. La coupe apparaissant à la figure 5 comporte un rabattement partiel : elle est exécutée selon les plans de coupe V V représentés à la figure 7.

Les tronçons 40 du fil 4 à poser sur le noyau 2 pour constituer le renforcement de sommet sont ainsi individualisés par les moyens de coupe. Chaque tronçon de fil ainsi isolé est soumis à l'action de la tête de pose 3B pour prendre sa place exacte sur le noyau. Les moyens de coupe, constitués dans les exemples illustrant l'invention par un couteau rotatif 84, interviennent donc en aval des galets de dévidage 80, 81 et en amont d'un dispositif de présentation 9B ou 9C dont le rôle est d'orienter correctement le fil 4, plus précisément chaque tronçon 40 de fil 4, par rapport au noyau 2, et de le présenter correctement à la tête de pose 3B ou 3C pour que celle-ci puisse le poser sur le noyau 2.

Un galet 300B ou 300C, monté à l'extrémité du bras 30, est l'organe d'application du fil 4 sur le noyau 2. Le rôle des dispositifs de présentation 9B et 9C est donc d'amener du fil 4 bien centré par rapport au galet 300B ou 300C respectivement, de l'amener entre le galet 300B ou 300C et le noyau 2, et également de contribuer à maintenir le fil 4 centré par rapport au galet 300B ou 300C pendant que celui-ci applique le fil 4 sur le noyau pendant la zone de pose de la trajectoire de la tête de pose 3B ou 3C.

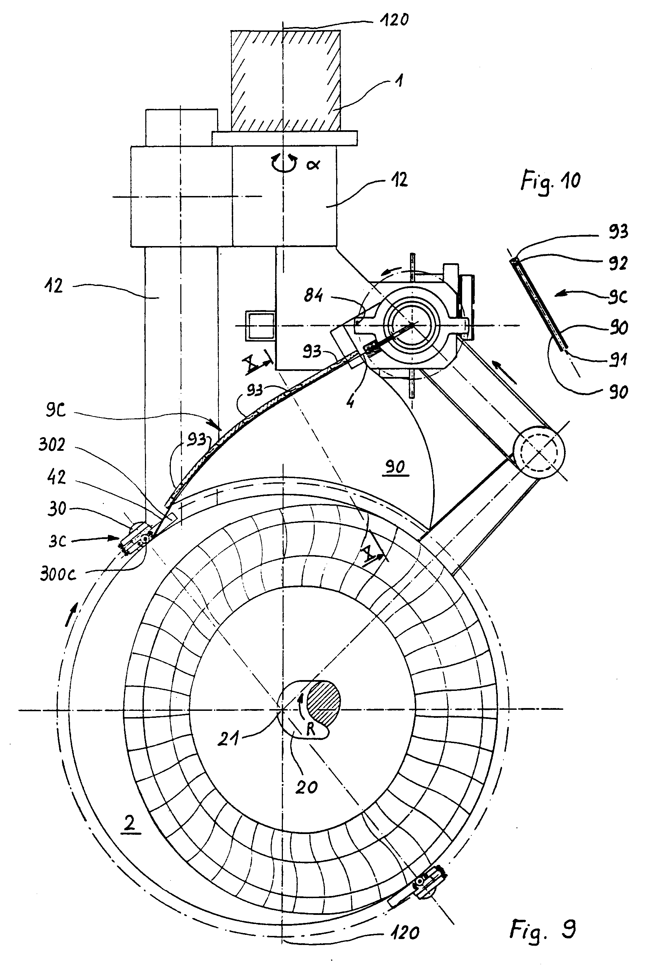

Bien entendu, le champ d'action de la tête de pose 3B ou 3C doit rester libre. Donc il subsiste l'espace nécessaire au déplacement de la tête de pose 3B et 3C entre le dispositif de présentation 9B et 9C respectivement, et le noyau 2, comme cela est bien visible aux figures 7 et 9.

Pour rappel, l'axe de rotation 20 du noyau 2 est fixe par rapport au bâti 1 de la machine. L'angle α de pose des fils 4 est obtenu par la rotation du berceau 12 supportant la tête de pose 3A ou 3B ou 3C autour de l'axe 120. En d'autres termes, l'angle α est obtenu par la présentation judicieuse du noyau 2 par rapport à la trajectoire de la tête de pose 3A, 3B, 3C. Le dispositif de présentation 9B ou 9C est donc lui-même fixe par rapport à la trajectoire de la tête de pose ; il est donc solidaire du berceau 12 supportant la tête de pose 3B ou 3C.

Aux figures 5 à 8, est illustrée une variante qui, tout comme la première, accepte aussi bien des fils métalliques que des fils textiles. Le dispositif de présentation est constitué par une tubulure 95 dans laquelle le fil coulisse, depuis sa sortie du canon 83 jusque par dessus le début de la zone de pose. La tubulure 95 est séparée du canon 83 de l'espace juste suffisant au passage du couteau 84.

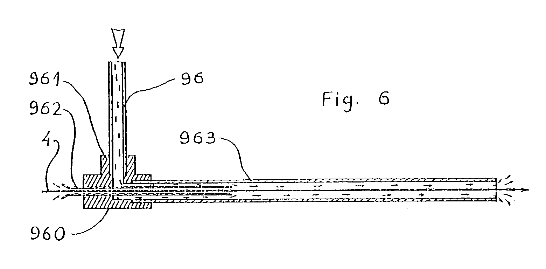

Les fils textiles doivent impérativement être maintenus bien tendus par une propulsion pneumatique. Le principe de cette propulsion pneumatique est illustré à la figure 6. La propulsion pneumatique est obtenue à l'intérieur d'un té 960 ayant une branche centrale 961 et deux branches alignées 962 et 963. La branche centrale 961 reçoit la canalisation 96 d'amené d'air comprimé. On voit que l'air comprimé est chassé par la branche 963. En introduisant le fil 4 par la branche 962 et, dès qu'il quitte la branche 962, l'air comprimé tend à expulser le fil 4 en permanence hors de la branche 963.

On voit la canalisation 96 qui amène l'air comprimé à trois endroits sur le chemin du fil 4. Tout d'abord, en amont des galets 80, 81 de dévidage, une propulsion pneumatique inverse 960i tend en permanence à retirer le fil 4 en arrière afin que, en cas d'arrêt ou de marche arrière de la machine pendant par exemple des phases de réglage au démarrage, le fil 4 reste toujours tendu, et ne s'accumule pas entre la trompette 85 de réception du fil 4 et les galets de dévidage 80, 81. En aval de ceux-ci, on trouve une première propulsion en sens avant 960a, implantée au début du tuyau 82 amenant le fil 4 vers le canon 83. Il peut être souhaitable de créer des pertes de charge par des trous percés au travers des tuyaux, en aval de tous les propulseurs avant 960a, afin de parvenir à un bon effort d'entraînement du fil 4. Enfin, une seconde propulsion en sens avant 960a est implantée au début de la tubulure 95, laquelle peut aussi comporter des trous créant des pertes de charge, environ au milieu de celle-ci. Une canalisation 96 amène l'air à un quatrième endroit, juste au bout de la tubulure 95.

Une goulotte 302, fixée au bras 30, fait partie de la tête de pose 3B. Elle est usinée dans la masse, ou obtenue par pliage d'une tôle, de façon à obtenir une surface réceptrice ayant l'allure d'un V, et est disposée devant le galet 300B, de façon à ce que le fond de la goulotte soit sensiblement parallèle au noyau 2. Cette goulotte 302 peut réceptionner l'extrémité 42 du fil 4, ce qui permet de tolérer une grande marge d'imprécision pour la position de présentation du fil 4 devant le galet 300B.

A l'extrémité de la tubulure 95, est implanté un canal de sortie 97 légèrement recourbé vers le noyau 2, pour que l'extrémité 42 du fil 4 vienne frapper le fond de la goulotte 302 avec un angle d'incidence d'environ 40°. De la sorte, ladite extrémité 42 se présente toujours entre le noyau 2 et le galet 300B. Il est bien certain que la forme de ce canal de sortie 97 et son orientation par rapport à la trajectoire de la tête de pose 3B sont très importantes pour atteindre une bonne précision et régularité de pose, alors que l'orientation de la tubulure 95 n'est pas déterminante.

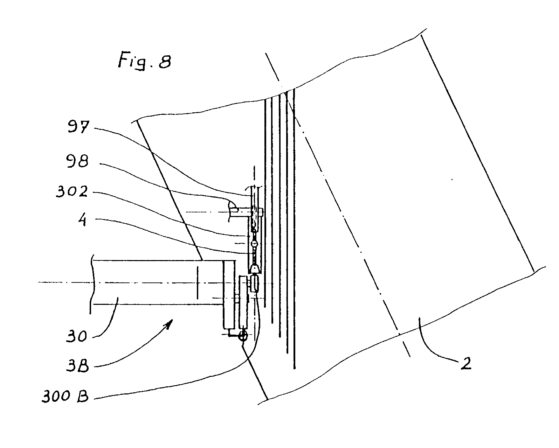

Juste en sortie du canal 97, un petit axe 98 (voir figures 7 et 8) permet au fil 4 de former une boucle progressive lorsque l'avance de la tête de pose 3B lui fait prendre l'allure d'un S. Le canal de sortie 97 est fendu du côté regardant vers le noyau, jusqu'au petit axe 98, afin que le fil 4 puisse s'échapper par cette fente et s'appuyer sur l'axe 98 pour former la première boucle du S ; la seconde boucle du S est déterminée par l'appui du fil 4 autour du galet 300B. A ce stade, l'avance de la tête de pose 3B provoque l'appel du tronçon 40 du fil 4 hors du canal 97 à vitesse linéaire double de la vitesse linéaire de pose du fil sur le noyau 2. Le fil 4 doit être bien guidé, tout en maintenant les frottements aussi faibles que possible. On peut noter que, dans cette deuxième variante, tout le tronçon 40 du fil 4 passe par le canal 97 et rejoint le début de la zone de pose, avant de repartir vers la fin de la zone de pose, alors que dans la troisième variante, on verra que le fil 4 ne forme jamais de boucle, chaque tronçon 40 se rabattant radialement dans son ensemble vers le noyau 2. En cas d'utilisation de fil 4 métallique, il faut que l'axe 98 et le galet 300 aient un rayon suffisant pour ne pas provoquer de déformation permanente du fil 4.

Aux figures 9 et 10, est illustrée la troisième variante, conçue spécifiquement pour poser du fil 4 métallique. Le dispositif de présentation 9C est constitué par deux tôles 90 parallèles, fixées au berceau 12, espacées d'une valeur légèrement supérieure au diamètre du fil 4. Par rapport au noyau 2, elles sont orientées radialement, et disposées linéairement de façon à couper le noyau 2 selon ledit angle de pose α. Remarquons que le fil métallique doit être préparé de façon à pouvoir adhérer au caoutchouc cru lorsqu'il y est appliqué. On trouve un exemple d'une telle préparation dans le brevet US 4 952 259.

Les tôles 9O guident latéralement le fil 4 de façon à le maintenir dans un plan pendant que son extrémité 42 rejoint le début de la zone de pose pour être plaquée par le galet 300C d'une part, et aussi d'autre part pendant que l'action du galet 300C entraîne le tronçon 40 du fil 4 radialement vers le bas pour le poser sur le noyau 2. L'orientation du canon 83 est réglée, en fonction du fil 4, pour que l'extrémité 42 propulsée en avant par les galets 80, 81 parvienne chaque fois entre le galet 300C et le noyau 2.

De préférence, le mouvement du couteau rotatif 84 est tel qu'il contribue à propulser le fil 4 vers le noyau 2 lorsque le couteau rotatif 84 le tranche au ras du canon 83.

De préférence, le fil 4 est maintenu rectiligne entre les tôles 90 par une force magnétique. L'enceinte 91 limitée latéralement par les tôles 90 est fermée vers le haut par un obturateur 92 en matériau amagnétique, sur lequel on a fixé plusieurs petits aimants 93, constituant une rampe aimantée attirant suffisamment le fil 4 pour le maintenir plaqué contre l'obturateur 92, et suffisamment peu pour qu'il puisse facilement être arraché par le mouvement de la tête de pose 3C. L'extrémité 42 du fil 4 peut ainsi être amenée devant le galet 300C de façon à la fois précise et fiable.

Une goulotte 302, fixée au bras 30, fait partie de la tête de pose 3C. Elle forme une surface réceptrice ayant l'allure d'un V, et est disposée devant le galet 300C, de façon à ce que le fond de la goulotte 302 soit sensiblement parallèle au noyau 2. Cette goulotte 302 peut réceptionner l'extrémité 42 du fil 4, ce qui permet de tolérer une grande marge d'imprécision pour la position de présentation du fil 4 devant le galet 300C. On a notamment une plus grande imprécision de présentation du fil 4 devant le galet 300 C lorsque l'on n'a pas prévu de rampe aimantée le long de l'obturateur 92. On oriente le canon 83 pour que l'extrémité 42 du fil 4 tombe plutôt trop en avant par rapport au galet 300C, afin d'être certain qu'elle ne tombe jamais par dessus ce galet 300C, ou dans la moitié supérieure de celui-ci. L'extrémité de cette goulotte 302 forme une boutonnière par laquelle le fil pénètre.

Dans cette variante de l'invention, parce que le tronçon 40 du fil 4 n'est pas propulsé de façon autonome, le fil 4 doit être collé au noyau grâce à l'action du galet 300C de la tête de pose 3C juste avant d'être coupé. En effet, la coupe du fil arrête brutalement le fil, même si ce n'est qu'une fraction de seconde. De ce fait, la suite de la pose du tronçon 40 individualisé serait totalement aléatoire, voire impossible. En amont de la coupe, le fil 4 propulsé à force par les galets 80 et 81, doit trouver l'espace nécessaire pour s'accumuler dans les jeux existant entre le fil 4 et le ou les guides dans lesquels il est enfilé.

Selon les applications de l'invention, on comprend aisément qu'il faut régler les phases d'intervention des différents organes. Ainsi, par exemple, on vient de voir que le galet de la tête de pose peut agir soit avant, soit après la coupe du fil 4 formant un tronçon 40.

De nombreuses modifications d'exécution peuvent très aisément être adoptées en restant dans le cadre de la présente invention. Ainsi par exemple, les deux dernières variantes décrites peuvent très facilement être utilisées avec des têtes de pose multiples, tournant toutes autour du même axe 39, réparties régulièrement sur la trajectoire, ce qui permet d'augmenter la cadence de pose, ou de diminuer la vitesse de rotation des têtes de pose, à cadence égale. Pour les renforts de sommets courants, un tronçon de fil se développe sur moins de 90° d'arc dans le sens circonférentiel. On peut donc très facilement implanter jusqu'à quatre têtes de pose 3B ou 3C sur un même axe de rotation 39, pour un seul dispositif de présentation 9B ou 9C. En outre, dans le cas de la variante B de l'invention, le fil est accéléré au double de la vitesse moyenne d'appel de fil dès qu'il est happé par la tête de pose 3B. Le dispositif de présentation 9B se vide donc deux fois plus vite. A condition de dédoubler le dispositif de présentation 9B, sauf à en garder un canal de sortie 37 commun, il est possible d'implanter jusqu'à huit têtes de pose 3B sur le même axe de rotation 39. Pour utiliser plusieurs têtes de pose avec la première variante, il est nécessaire d'embarquer en rotation avec les têtes de pose autant de bobines d'alimentation qu'il y a de têtes de pose.

Bien entendu, les machines exécutant le procédé de l'invention peuvent être très facilement "multi-dimensions", c'est-à-dire capables de fabriquer des pneumatiques de dimensions différentes aussi bien par le diamètre au sommet que par la largeur ; dans ce cas, le bras 30 doit être réglable, ainsi que tout ce qui coopère avec le bras au niveau de la zone de pose, comme par exemple les dispositifs de présentation.

On peut aussi envisager de poser plusieurs fils à la fois, ou des fils de nature différente. Il est très facile que la trajectoire du fil, une fois posé sur le noyau, ne soit pas linéaire. Pour cela, sans rien changer aux mécanismes d'appel et de pose du fil qui ont été décrits, notamment en maintenant une trajectoire circulaire pour la tête de pose, il suffit de déplacer le noyau de façon adéquate pendant que la tête est en phase de pose d'un tronçon de fil. Au mouvement de rotation du noyau sur lui-même, on ajoute un mouvement de translation le long de l'axe 20, ou de rotation autour de l'axe 120, ou une combinaison de ces deux mouvements, ou encore on incline le noyau par rapport à son axe de rotation 20. Plus généralement, on impartit les mouvements relatifs adéquats de la tête de pose par rapport au noyau.

## Revendications

1. Procédé de fabrication d'un pneumatique dont un renfort au moins est constitué à partir d'un seul fil (4) dont des tronçons (40) successifs, prélevés hors dudit fil par des moyens de coupe, sont déposés sur un support rigide (2) définissant la forme de la surface intérieure du pneumatique, et sur lequel on construit progressivement tout ou partie du pneumatique caractérisé en ce que
- le fil nécessaire pour constituer un tronçon (40) est prélevé par des moyens d'alimentation en fil, permettant l'appel d'une quantité déterminée de fil, destinée à constituer un tronçon (40),
- chaque tronçon (40) est posé par au moins une tête de pose (3A, 3B ou 3C) décrivant une trajectoire orbitale entourant le support, ladite trajectoire comportant une zone de pose du tronçon (40) de fil, ladite trajectoire orbitale se développant dans un plan qui coupe l'axe de rotation du support selon un angle de pose réglable,
- ledit support est animé d'un mouvement de rotation dont la vitesse angulaire dépend de la vitesse angulaire de la tête de pose, de l'angle de pose, du nombre de têtes de pose, et du pas de pose des tronçons de fil.

2. Procédé selon la revendication 1 dans lequel le fil est amené par la tête de pose (3A) qui comporte, en arrière par rapport à son mouvement, un orifice de sortie du fil, caractérisé en ce que les moyens d'alimentation sont constitués par un moyen d'immobilisation fixe dans l'espace, disposé sur la trajectoire au début de la zone de pose, immobilisant le fil afin que la poursuite du mouvement de la tête de pose provoque l'appel de fil, et en ce que le prélèvement d'un tronçon (40) est effectué par lesdits moyens de coupe, qui sont embarqués sur la tête de pose, pour sectionner le fil lorsque la quantité déterminée de fil est atteinte.

3. Procédé selon la revendication 1, dans lequel les moyens d'alimentation sont indépendants de la tête de pose (3B ou 3C), caractérisé en ce que les moyens d'alimentation assurent l'appel du fil et la mesure de la quantité appelée, puis l'introduction du fil dans un dispositif de présentation (9B ou 9C) formant l'angle voulu par rapport au support et en ce que le prélèvement d'un tronçon est effectué par lesdits moyens de coupe, intervenant pour sectionner le fil lorsqu'un tronçon de longueur déterminé a -te introduit dans ledit dispositif de présentation (9B ou 9C), et en ce que le tronçon (40) de fil est plaqué sur le support par ladite tête de pose (3B ou 3C).

4. Machine de fabrication d'un renfort pour pneumatique, ledit renfort étant constitué à partir d'un seul fil (4) dont des tronçons (40) successifs, prélevés hors dudit fil par des moyens de coupe, sont déposés sur un support rigide (2) définissant la forme de la surface intérieure du pneumatique, et sur lequel on construit progressivement tout ou partie du pneumatique, caractérisée en ce qu'elle comporte
- un bâti (1),
- un noyau (2) rotatif, rigide, démontable, constituant ledit support,
- des moyens de dévidage pour prélever la quantité déterminée de fil nécessaire pour constituer un tronçon (40),
- au moins une tête de pose décrivant une trajectoire orbitale entourant le noyau (2), ladite trajectoire comportant une zone de pose, ladite trajectoire se développant dans un plan qui coupe l'axe de rotation du noyau (2) selon un angle de pose réglable,
- des moyens d'entraînement de la ou des têtes de pose, et des moyens d'entraînement en rotation du noyau, la vitesse angulaire de ces derniers dépendant de la vitesse angulaire d'entraînement de la ou des têtes de pose, de leur nombre, dudit angle de pose, et du pas de pose des tronçons de fil.

5. Machine selon la revendication 4, caractérisée en ce que ladite trajectoire est circulaire, l'axe de rotation de la tête (3A, 3B ou 3C) coupant l'axe du noyau (2), et en ce que la trajectoire se développe à un rayon juste supérieur au rayon maxi du noyau (2).

6. Machine selon la revendication 5 dans laquelle le fil (4) est amené par la tête de pose (3A) elle-même, qui comporte un orifice de sortie (301) du fil, en arrière par rapport à son mouvement, caractérisée en ce que les moyens de dévidage sont constitués par une pince (51+52) d'immobilisation fixée sur le bâti, au voisinage de l'endroit où la tête de pose (3A) entre dans la zone de pose, ladite pince (51+52)immobilisant le fil lorsque l'extrémité libre du fil atteint la zone de pose, afin que la poursuite du mouvement de la tête de pose provoque l'appel de fil, et en ce que chaque tronçon est individualisé par lesdits moyens de coupe, constitués par une guillotine (7) embarquée sur la tête de pose (3A).

7. Machine selon la revendication 6, caractérisée en ce qu'elle comporte un dispositif d'extraction faisant sortir une longueur déterminée de fil hors de la tête de pose pendant que celle-ci est dans la zone de retour.

8. Machine selon la revendication 7, caractérisée en ce qu'elle comporte
- une première came (36) assurant la commande de la guillotine (7),
- une deuxième came (38) assurant la commande de la pince (5),
- une troisième came (37) assurant la commande du dispositif d'extraction,
toutes les cames étant disposées sur l'axe de rotation (300) de ladite tête (3),
les première et troisième cames (36, 37) étant non mobiles en rotation,
la deuxième (38) étant liée à la rotation de la tête de pose.

9. Machine selon la revendication 4, dans laquelle le fil est présenté à la tête de pose (3B ou 3C) par des organes distincts de celle-ci, caractérisée en ce que
- les moyens de dévidage sont constitués par deux galets (80, 81) entre lesquels le fil est pincé, la motorisation d'un galet au moins permettant l'appel du fil et la mesure de la quantité appelée, puis l'introduction du fil dans un dispositif (9B ou 9C) de présentation formant l'angle de pose voulu par rapport au noyau (2), et en ce que
- chaque tronçon de fil est individualisé par lesdits moyens de coupe, constitués par un couteau (84) rotatif fixé au bâti (1), entre les galets (80,81) de dévidage et le dispositif de présentation (9B ou 9C).

10. Machine selon la revendication 9, caractérisée en ce que le dispositif de présentation (9C) est constitué par une enceinte limitée par deux tôles (90) parallèles, espacées d'une valeur légèrement supérieure au diamètre du fil, disposées radialement par rapport au noyau (2) et formant ledit angle de pose, et en ce que le fil est introduit entre ces deux tôles (90) par un canon (83) visant le début de la zone de pose sur le noyau (2), et en ce que le couteau rotatif (84) tranche le fil (4) juste à la sortie du canon (83), par un mouvement orienté vers le noyau.

11. Machine selon la revendication 10, caractérisée en ce que l'enceinte est limitée radialement vers le haut par une rampe linéaire aimantée (92), disposée parallèlement à la trajectoire du fil en sortie du canon (83), et radialement juste au dessus de celle-ci.

12. Machine selon la revendication 9, caractérisée en ce que le dispositif de présentation (9B) est constitué par un tube (95) disposé sensiblement sur une tangente au noyau (2), et en ce que le fil (4) est introduit dans le tube (95) par un canon (83) visant le début de la zone de pose sur le noyau (2), et en ce que le couteau rotatif (83) tranche le fil (4) juste à la suite du canon (84).

13. Machine selon la revendication 12, caractérisée en ce que la tête de pose (3B) comporte
. une goulotte (302) de réception de l'extrémité du fil,
. un galet d'application (300B),
et en ce qu'un axe d'appui pour le fil est disposé juste à la sortie du tube (95).

14. Machine selon l'une des revendications 4 à 12, caractérisée en ce que le plan dans lequel se développe la trajectoire de la tête de pose est réglable en translation par rapport au noyau.

## Claims

1. A process for the manufacture of a tyre, at least one reinforcement of which is formed from a single cord (4), successive lengths (40) of which, removed from said cord by cutting means, are deposited on a rigid support (2) defining the shape of the inner surface of the tyre, and on which all or part of the tyre is progressively built, characterised in that:
- the cord necessary to constitute a length (40) is removed by cord feed means permitting the feeding of a given amount of cord intended to constitute a length (40),
- each length (40) is laid by at least one laying head (3A, 3B or 3C) which describes an orbital path surrounding the support, said path comprising a laying zone for the length (40) of cord, said orbital path being contained in a plane which intersects the axis of rotation of the support by an adjustable laying angle,
- said support is moved in a rotary movement, the angular speed of which depends on the angular speed of the laying head, the laying angle, the number of laying heads, and the laying pitch of the lengths of cord.

2. A process according to Claim 1 in which the cord is fed by the laying head (3A) which comprises, at the rear with respect to its movement, an orifice for the outlet of the cord, characterised in that the feed means are constituted by an immobilising means fixed in space, arranged on the path at the beginning of the laying zone, immobilising the cord so that the continuation of the movement of the laying head causes the feeding of cord, and in that the removing of a length (40) is effected by said cutting means located on the laying head, in order to cut the cord when the given quantity of cord is reached.

3. A process according to Claim 1 in which the feed means are independent from the laying head (3B or 3C), characterised in that the feed means ensure the feeding of the cord and the measurement of the quantity fed, then the introduction of the cord into a presentation device (9B or 9C) forming the desired angle with respect to the support, and in that the removing of a length is effected by said cutting means acting to cut the cord when a length of given length has been introduced into said presentation device (9B or 9C), and in that the length (40) of cord is applied against the support by said laying head (3B or 3C).

4. A machine for the manufacture of tyre reinforcements, said reinforcements being formed from a single cord (4), successive lengths (40) of which, removed from said cord by cutting means, are deposited on a rigid support (2) defining the shape of the inner surface of the tyre, and on which all or part of the tyre is progressively built, characterised in that it comprises:
- a frame (1),
- a dismountable rigid rotary core (2) constituting said support,
- unwinding means for removing the given quantity of cord necessary to constitute a length (40),
- at least one laying head describing an orbital path around the core (2), said path comprising a laying zone, said path being contained within a plane which intersects the axis of rotation of the core (2) at an adjustable laying angle,
- drive means for the laying head or heads and means for the driving in rotation of the core, the angular speed of said latter means depending on the angular drive speed of the laying head or heads, their number, the laying angle, and the laying pitch of the lengths of cord.

5. A machine according to Claim 4, characterised in that said path is circular, the axis of rotation of the head (3A, 3B or 3C) intersecting the axis of the core (2), and in that the path proceeds with a radius just larger than the maximum radius of the core (2).

6. A machine according to Claim 5 in which the cord (4) is fed by the laying head (3A) itself, which comprises an outlet orifice (301) for the cord at the rear with respect to its movement, characterised in that the unwinding means are constituted by an immobilising clamp (51+52) fastened on the frame in the vicinity of the place where the laying head (3A) enters into the laying zone, said clamp (51+52) immobilising the cord when the free end of the cord reaches the laying zone, so that the continuation of the movement of the laying head causes the feeding of cord, and in that each length is individualised by said cutting means, formed of a guillotine (7) arranged on the laying head (3A).

7. A machine according to Claim 6, characterised in that it comprises an extraction device causing a given length of cord to come out of the laying head while the latter is in the return zone.

8. A machine according to Claim 7, characterised in that it comprises:
- a first cam (36) ensuring the drive of the guillotine (7),
- a second cam (38) ensuring the drive of the clamp (5),
- a third cam (37) ensuring the drive of the extraction device,
all the cams being arranged on the rotation shaft (300) of said head (3),
the first and third cams (36, 37) being non-mobile in rotation,
the second cam (38) being connected to the rotation of the laying head.

9. A machine according to Claim 4 in which the cord is presented to the laying head (3B or 3C) by parts distinct from the latter, characterised in that
- the unwinding means are formed of two rollers (80, 81) between which the cord is clamped, the driving of at least one roller permitting the feeding of the cord and the measurement of the amount fed, then the introduction of the cord into a presentation device (9B or 9C) forming the desired laying angle with respect to the core (2), and in that
- each length of cord is individualised by said cutting means formed by a rotary knife (84) fastened to the frame (1) between the unwinding rollers (80, 81) and the presentation device (9B or 9C).

10. A machine according to Claim 9, characterised in that the presentation device (9C) is formed by an enclosure limited by two parallel metal sheets (90) spaced apart by an amount slightly greater than the diameter of the cord and arranged radially with respect to the core (2) and forming said laying angle, and in that the cord is introduced between these two sheets (90) by a barrel (83) facing the start of the laying zone on the core (2), and in that the rotary knife (84) cuts the cord (4) just upon emergence from the barrel (83) by a movement directed towards the core.

11. A machine according to Claim 10, characterised in that the enclosure is limited radially towards the top by a magnetised linear ramp (92) arranged parallel to the path of the cord emerging from the barrel (83) and radially just above the latter.

12. A machine according to Claim 9, characterised in that the presentation device (9B) is formed by a tube (95) arranged substantially on a tangent to the core (2), and in that the cord (4) is introduced into the tube (95) by a barrel (83) which faces the start of the laying zone on the core (2), and in that the rotary knife (83) cuts the cord (4) just after the barrel (84).

13. A machine according to Claim 12, characterised in that the laying head (3B) comprises:
. a chute (302) for receiving the end of the cord,
. an application roller (300B),
and in that a resting shaft for the cord is arranged just at the outlet of the tube (95).

14. A machine according to one of Claims 4 to 12, characterised in that the plane in which the path of the laying head is contained is adjustable in translation with respect to the core.

## Patentansprüche

1. Verfahren zur Herstellung eines Luftreifens mit wenigstens einer Verstärkung, die aus einem einzelnen Faden (4) gebildet ist, von dem aufeinanderfolgende Stücke (40), die vom Faden durch Schneideinrichtungen genommen werden, auf einer steifen Unterlage (2) angeordnet werden, die die Form der Innenoberfläche des Luftreifens definiert, und auf der fortschreitend der ganze Luftreifen oder ein Teil davon aufgebaut wird,
**dadurch gekennzeichnet, daß**
- der zum Bilden eines Stückes (40) notwendige Faden von Fadenzufuhreinrichtungen genommen wird, die den Abruf einer vorgegebenen, zum Bilden eines Stückes (40) vorgesehenen Fadenmenge ermöglichen,
- jedes Stück (40) von wenigstens einem Anbringkopf (3A, 3B oder 3C) angebracht wird, der eine die Unterlage umkreisende Umlaufbahn beschreibt, wobei die Bahn einen Abschnitt zum Abbringen des Fadenstücks (40) umfaßt und in einer Ebene liegt, die die Drehachse der Unterlage unter einem regelbaren Anbringwinkel schneidet,
- die Unterlage in eine Drehbewegung versetzt wird, deren Winkelgeschwindigkeit von der Winkelgeschwindigkeit des Anbringkopfs, dem Anbringwinkel, der Anzahl der Anbringköpfe und dem Anbringabstand der Fadenstücke abhängt.

2. Verfahren nach Anspruch 1, bei dem der Faden durch den Abbringkopf (3A) zugeführt wird, der auf seine Bewegungsrichtung bezogen hinten eine Ausgangsöffnung für den Faden aufweist,
dadurch gekennzeichnet, daß
die Zufuhreinrichtungen gebildet sind durch eine Ortsfest-Halteeinrichtung, die auf der Bahn am Anfang des Anbringabschnitts angeordnet ist und den Faden festhält, so daß die Fortsetzung der Bewegung des Anbringkopfs den Abruf des Fadens bewirkt, und daß die Abnahme eines Stückes (40) durch die Schneideinrichtungen bewirkt wird, die an dem Anbringkopf angebracht sind, um den Faden zu durchtrennen, wenn die vorgegebene Fadenmenge erreicht ist.

3. Verfahren nach Anspruch 1, bei dem die Fadenzufuhreinrichtungen vom Anbringkopf (3B oder 3C) unabhängig sind,
dadurch gekennzeichnet, daß
die Zufuhreinrichtungen den Abruf des Fadens und die Messung der abgerufenen Menge und dann die Einführung des Fadens in eine Präsentationsvorrichtung (9B oder 9C) sicherstellen, die mit der Unterlage den gewünschten Winkel bildet, und daß die Abnahme eines Stücks durchgeführt wird durch die Schneideinrichtungen, die den Faden durchtrennen, wenn ein Stück mit vorgegebener Länge in die Präsentationsvorrichtung (9B oder 9C) eingeführt worden ist, und daß das Fadenstück (40) durch den Abbringkopf (3B oder 3C) auf die Unterlage gedrückt wird.

4. Maschine zur Herstellung einer Verstärkung für einen Luftreifen, wobei die Verstärkung aus einem einzelnen Faden (4) gebildet ist, von dem aufeinanderfolgende Stücke (40) die mit Schneideinrichtungen vom Faden abgenommen werden, auf einer steifen Unterlage (2) angeordnet werden, die die Form der Innenoberfläche des Luftreifens definiert und auf der fortschreitend der ganze Luftreifen oder ein Teil davon aufgebaut wird,
**gekennzeichnet durch**
- einen Rahmen (1),
- einen abnehmbaren steifen drehbaren Kern (2), der die Unterlage bildet,
- Abspuleinrichtungen zum Abnehmen der zum Bilden eines Stückes (40) erforderlichen vorgegebenen Fadenmenge,
- wenigstens einen Anbringkopf, der eine Umlaufbahn um den Kern (2) beschreibt, welche einen Anbringabschnitt umfaßt und in einer Ebene verläuft, die die Drehachse des Kerns (2) unter einem regelbaren Anbringwinkel schneidet,
- Antriebseinrichtungen für den oder die Anbringköpfe und Drehantriebseinrichtungen für den Kern, wobei die Winkelgeschwindigkeit des letzteren von der Winkelgeschwindigkeit des Antriebs des oder der Anbringköpfe, ihrer Zahl, dem Anbringwinkel und dem Anbringabstand der Fadenstücke abhängt.

5. Maschine nach Anspruch 4,
dadurch gekennzeichnet, daß
die Bahn kreisförmig ist, die Drehachse des Kopfs (3A, 3B oder 3C) die Achse des Kerns (2) schneidet, und daß die Bahn mit einem geringfügig größeren Durchmesser als dem maximalen Durchmesser des Kerns (2) verläuft.

6. Maschine nach Ansbruch 5, bei der der Faden (4) durch den Abbringkopf (3A) zugeführt wird, der bezogen auf seine Bewegungsrichtung hinten eine Ausgangsöffnung (301) umfaßt,
dadurch gekennzeichnet, daß
die Abspuleinrichtungen durch eine Haltezange (51+52) gebildet sind, die am Rahmen in der Nähe der Stelle, an der der Anbringkopf (3A) in den Anbringabschnitt eintritt, befestigt ist, und die den Faden festhält, wenn das freie Ende des Fadens den Anbringabschnitt erreicht, so daß die Fortsetzung der Bewegung des Anbringkopfs den Anruf des Fadens bewirkt, und daß jedes Fadenstück durch die Schneideinrichtung abgetrennt wird, die durch einen am Anbringkopf (3A) vorgesehenen Querschneider (7) gebildet sind.

7. Maschine nach Anspruch 6,
dadurch gekennzeichnet, daß
sie eine Ausziehvorrichtung umfaßt, die eine vorgegebene Fadenlänge aus dem Anbringkopf heraustreten läßt, während dieser im Rückkehrabschnitt ist.

8. Maschine nach Anspruch 7,
dadurch gekennzeichnet, daß sie umfaßt:
- einen ersten Nocken (36), der den Querschneider (7) steuert,
- einen zweiten Nocken (38), der die Zange (5) steuert,
- einen dritten Nocken (37), der die Ausziehvorrichtung steuert,
wobei alle Nocken auf der Drehachse (300) des Kopfs (3) angeordnet sind,
der erste und dritte Nocken (36, 37) nicht drehbeweglich sind,
der zweite (38) an die Drehung des Anbringkopfs gekoppelt ist.

9. Maschine nach Anspruch 4, bei der der Faden dem Anbringkopf (3B oder 3C) durch von diesem getrennte Einrichtungen präsentiert wird, dadurch gekennzeichnet, daß
- die Abspuleinrichtungen durch zwei Rollen (80, 81) gebildet sind, zwischen denen der Faden eingeklemmt ist, wobei der Antrieb wenigstens einer Rolle den Abruf des Fadens und die Messung der abgerufenen Menge und dann die Einführung des Fadens in eine Präsentationsvorrichtung (9B oder 9C) ermöglicht, die mit dem Kern (2) den gewünschten Anbringwinkel bildet, und daß
- jedes Fadenstück durch die Schneideinrichtungen abgetrennt wird, die durch ein am Rahmen (1) befestigtes drehbares Messer (84) zwischen den Abspulrollen (80, 81) und der Präsentationsvorrichtung (9B oder 9C) gebildet sind.

10. Maschine nach Anspruch 9,
dadurch gekennzeichnet, daß
die Präsentationsvorrichtung (9C) durch ein von zwei parallelen Blechen (90) begrenztes Behältnis gebildet ist, wobei die Bleche einen Abstand voneinander haben, der geringfügig größer als der Durchmesser des Fadens ist, radial zum Kern (2) angeordnet sind und den Anbringwinkel bilden, und daß der Faden zwischen die zwei Bleche (90) durch einen Lauf (83) eingeführt wird, der auf den Anfang des Anbringabschnitts aus dem Kern (2) zielt, und daß das drehbare Messer (84) den Faden (4) direkt am Ausgang des Laufs durch eine zum Kern hin gerichtete Bewegung durchtrennt.

11. Maschine nach Anspruch 10,
dadurch gekennzeichnet, daß
das Behältnis nach oben durch eine lineare magnetische Rampe (92) begrenzt ist, die parallel zur Bahn des Fadens am Ausgang des Laufs (83) und radial direkt oberhalb dieser angeordnet ist.

12. Maschine nach Anspruch 9,
dadurch gekennzeichnet, daß
die Präsentationsvorrichtung (9B) durch ein Rohr (95) gebildet ist, das im wesentlichen auf einer Tangente zum Kern (2) angeordnet ist, und daß der Faden (4) in das Rohr (95) durch einen Lauf (83) eingeführt wird, der auf den Anfang des Anbringabschnitts auf dem Kern (2) zielt, und daß das drehbare Messer (84) den Faden (4) direkt hinter dem Lauf (83) durchtrennt.

13. Maschine nach Anspruch 12,
dadurch gekennzeichnet, daß der Anbringkopf (3B)
- einen Aufnahmetrichter (302) für das Ende des Fadens, und
- eine Anbringrolle (300B) umfaßt,
und daß eine Andrückspindel für den Faden direkt am Ausgang des Rohrs (95) angeordnet ist.

14. Maschine nach einem der Ansprüche 4 bis 12,
dadurch gekennzeichnet, daß
die Ebene, in der die Bahn des Anbringkopfs liegt, durch Verschiebung gegen den Kern regelbar ist.
